# EUROPEAN PATENT APPLICATION

(11) **EP 2 316 624 A2**
(43) Date of publication of application: **04.05.2011**
(21) Application number: 10007901.1
(22) Date of filing: 29.07.2010
(51) Int. Cl.: B27M 3/00, E04C 2/12

(54) **Multi-layer wood panel**

(30) Priority: 30.10.2009 RU 2009139982
(71) Applicant: Dorozhkin, Sergey Evgenievic, Moscow 117534 (RU)
(72) Inventor: Dorozhkin, Sergey Evgenievic, Moscow 117534 (RU)
(74) Representative: Forattini, Amelia

(57) **Abstract**

A multi-layer wood panel characterized in that it comprises a core member made of board layers (2,3,4) and two external finishing layers (6,7) made of boards joined at the edges; said layers are made of grooved boards joined at the edges, said board layers of said core member are joined together by pegs (11); at least part of said pegs penetrating all said board layers at an angle; said core member boards and said finishing layers are joined by keyed connections (10,100).

## Description

The present invention relates to a multi-layer wood panel.

The multi-layer wood panel according to the present invention may be used in the construction industry to make wall panels for exterior and interior walls as well as for ceiling coverings.

Sandwich panels for building cottages are known for example from RU-59096 which discloses a panel comprising a support framework made of timber, external and internal facing and layers of thermal insulation, waterproofing, and a vapour barrier. The support framework consists of inner and outer rectangular frames of equal external dimension, where one of the timbers of the long side of the frame is wider than the timbers of the other sides. The frames are mutually offset by width and are joined into one piece, forming projections for joining to other panels. The external frame has a load-bearing element mounted along its length, while the internal frame has at least three load-bearing elements mounted along its width. Those load-bearing elements are made of timbers whose ends are attached to the frames. There is a layer of waterproofing between the inner frame and inner facing, and a vapour barrier between the outer frame and outer facing. The space between them is filled with thermal insulation. Facing is fabricated of wood tile and the projections for joining to other panels are covered with foamed polyethylene strip sealant.

Among the disadvantages of conventional sandwich panels there is poor air permeability, caused by the presence of waterproofing and the vapour barrier. This requires supplemental humidity control within the premises of a building, because the humidity in a house with impaired ventilation is always higher than that in a house with normal and natural ventilation. This makes dampness, mould and rot more likely in wooden house elements, and may adversely impact health.

Also, conventional panels are characterized by the design's insufficient thermal lag, owing to the low thermal capacity of the minerals used in the basic framework volume (principally, the mineral lining). Such minerals insulate the premises from loss of heat but in summer they are unable to relieve the house of heat even by mid-day.

RU-2354788 discloses a wood and metal composite panel which contains a cellular wood-and-metal framework formed by longitudinal and transverse wood boards that are joined using U-shaped metal frames that repeat their configuration and grip the boards by both sides. Stiffeners in the form of flat plates are attached to the frames at framework cell joints. The panel contains facing and a layer of waterproofed thermal insulation as well. This wood-and-metal composite panel also exhibits the aforementioned disadvantages, which are caused by the layer of waterproofed thermal insulation.

RU-2198271 discloses a prefabricated laminated timber unit, which contains at least three bonded layers of wood components mounted alongside each other and fabricated in the shape of boards or bars. The wood components of at least two layers are oriented in different directions. Separate layers are joined using pegs that penetrate the wood component layers. Such a design overcomes some of the disadvantages of the aforementioned technical solutions. At the same time, such prefabricated units have shortcomings of their own. One of those disadvantages is constituted by the fact that pegs completely penetrate the prefabricated unit, thus resulting in a need to apply additional finishing material. It is also very important to mention that the prefabricated unit exhibits higher air permeability. In addition, in use, this prefabricated unit exhibits structural loosening.

The aim of the present invention is to provide a multi-layer wood panel that overcomes the above mentioned disadvantages of the cited prior art.

Within this aim, an object of the invention is to provide a multi-layer wood panel with reduced cost for finishing materials.

A further aim of the present invention is to provide a multi-layer wood panel with improved insulation and air permeability characteristics.

Still a further aim of the present invention is to provide a multi-layer wood panel with improved structural strength.

The above aims and other aims that will be more apparent hereinafter, are achieved by a multi-layer wood panel characterized in that it comprises a core member made of board layers and two external finishing layers made of boards joined at the edges; said layers are made of grooved boards joined at the edges, said board layers of said core member are joined together by pegs; at least part of said pegs penetrating all said board layers at an angle; said core member boards and said finishing layers are joined by keyed connections.

Further characteristics and advantages of the invention will be more apparent by the following description of an embodiment of the invention, illustrated, by way of example in the enclosed drawings in which
Figure 1 is a perspective view of a section of the multi-layer wood panel according to the invention;
Figure 2 is a perspective, partially cutout, view of the multi-layer wood panel according to a further aspect of the invention;
Figure 3 is a partially exploded perspective view of the multi-layer wood panel of figure 1;
Figure 4 is a cross section view, according to the section plane IV-IV of Figure 3;
Figure 5 is a cross section view, according to the section plane V-V of Figure 3.

With reference to the above figures, multi-layer wood panel, according to the invention, globally designated by the reference numeral 1 comprises a core member made of several board layers, respectively designated by the reference numerals 2, 3 and 4.

Each layer is made of grooved boards joined at edges 5.

The panel 1 also comprises two external finishing layers 6 and 7 made of boards joined at edges 8.

According to the invention the finishing layers are joined to the core member by means of keys 10, 100 engaging grooves 9 provided on the external surfaces of the board layers.

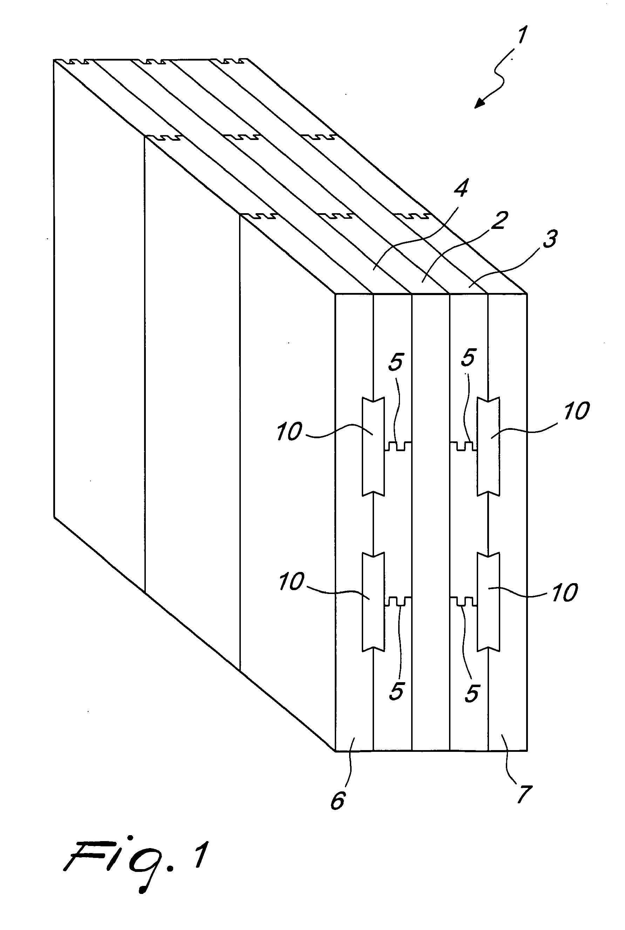

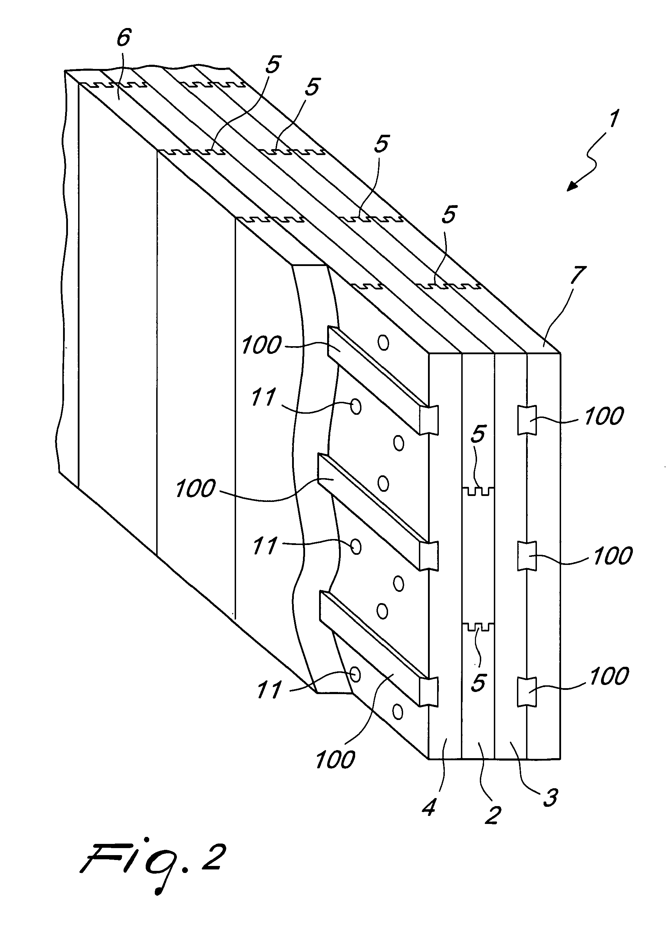

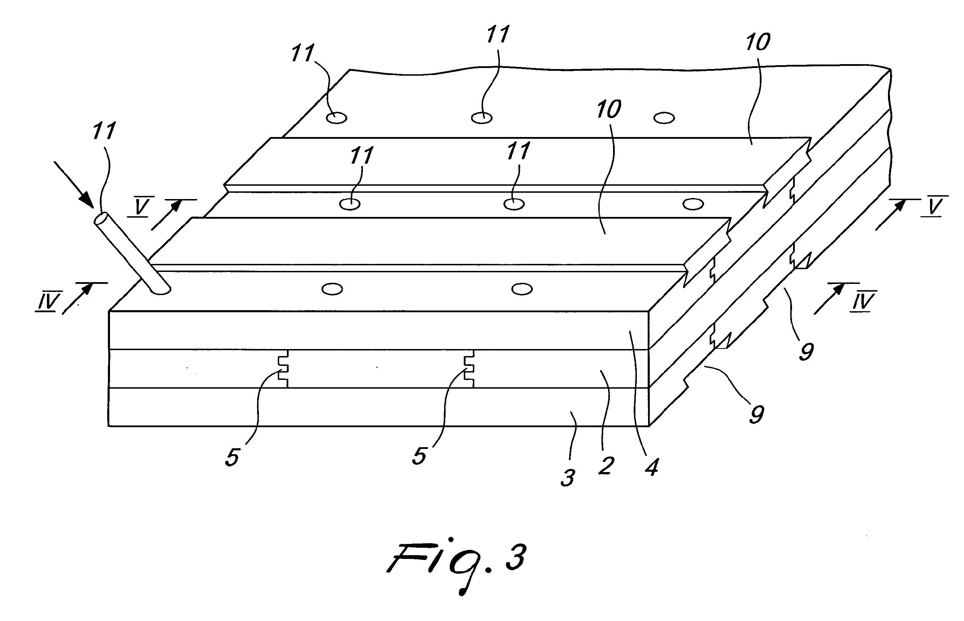

Figure 1 and 3 show keys 10 of a larger section while Figure 2 shows an embodiment with keys 100 having a smaller section.

Also according to the invention, the board layers of the core member are joined together by means of a wood pegs 11.

The wood pegs 11 are preferably arranged at regular intervals and at least some of the pegs penetrate all the board layers of the panel core member at an angle α with respect to a direction 12 perpendicular to the board layer plane.

The core member 2, 3, 4 and the external finishing layers 6, 7 of the panel are joined using keyed connections.

The shape of the keys 10, 100 corresponds to the shape of key grooves 9 made in the outer surfaces of the grooved boards of the core member and in the inner surfaces of the outer finishing layers 6 and 7.

The keys 10, 100, and grooves 9 are preferably oriented perpendicular or parallel to the direction of the grooved boards wood fibers.

Preferably, the keys 10, 100 have a trapezoid cross section with the wide base embedded in the body of the layer.

The layers of at least the core member are preferably made of timber, preferably from coniferous species, dried to a moisture content no higher than 18%.

Pegs 11 and keys 10, 100 are preferably made of hardwood timber, for example, beech, birch or oak, dried to a moisture content no higher than 10 %.

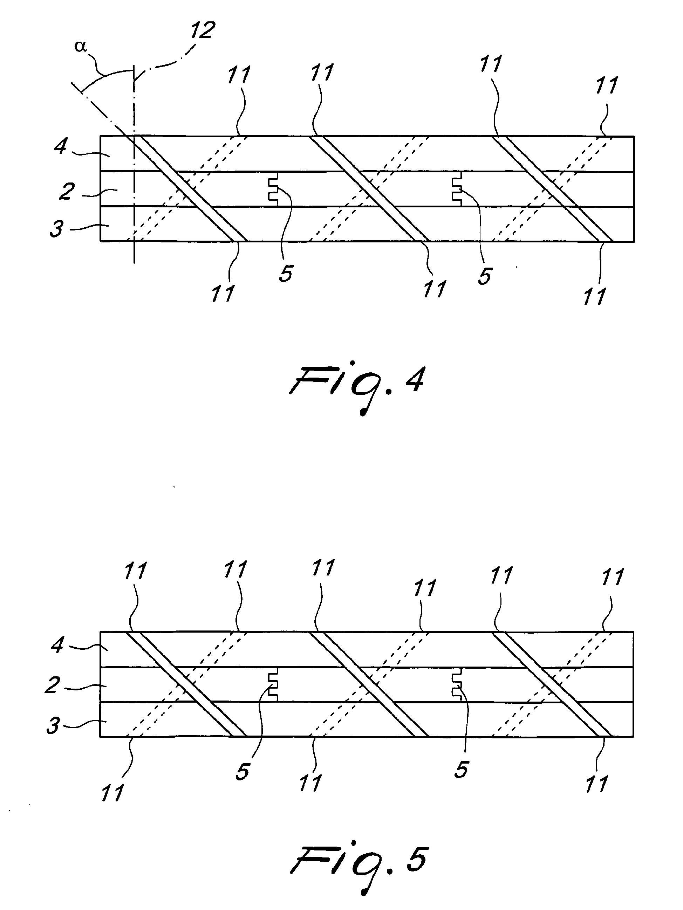

The pegs axes are preferably oriented in several parallel planes, so that the pegs axes in one plane are parallel to each other and not parallel to the pegs axes in adjacent parallel planes, as best shown in figures 4 and 5.

The panel is assembled as follows: the layers 2, 3 and 4 of the core member are first assembled using the grooved boards, and are placed on top of each other so that fibers in adjacent layers are oriented perpendicular to each other.

Then peg holes are drilled in the core layer at an angle α, preferably between 20° to 45°.

The pegs 11 are hammered into the drilled holes and cut flush with the outer surface of the core member.

Key mortises 9 of trapezoid shape are then cut in the outer surfaces of the core member with the wide base embedded in the layer.

Shaped keys 10,100 are inserted in the grooves and then the finishing layers 6 and 7 are mounted using the keys 10, 100.

The finishing layers 6 and 7 are polished or otherwise finished, if desired.

Fabricating layers from grooved boards reduces the air permeability of the panel.

Orienting the fibers of adjacent layers perpendicular to each other, and placing pegs at an angle to the layers of the grooved boards, reduces the likelihood of loosening the connections during use.

Using keyed connections to join the core member with the outer finishing layers reduces panel finishing costs.

The multi-layer wood panel according to the invention achieves the intended aims and objects.

This application claims the priority of Russian Utility Model Application No. 2009139982, filed on 30 October 2009, the subject matter of which is incorporated herein by reference.

## Claims

1. A multi-layer wood panel **characterized in that** it comprises a core member made of board layers and two external finishing layers made of boards joined at the edges; said layers are made of grooved boards joined at the edges, said board layers of said core member are joined together by pegs; at least part of said pegs penetrating all said board layers at an angle; said core member boards and said finishing layers are joined by keyed connections.

2. The multi-layer wood panel, according to claim 1, **characterized in that** said keyed connections comprise trapezoidal keys inserted in correspondingly shaped grooves.

3. The multi-layer wood panel, according to claim 1 or 2, **characterized in that** said layers of said core segment are made of timber, from coniferous species, and dried to a moisture level between 10 and 18%.

4. The multi-layer wood panel, according to one or more of the preceding claims, **characterized in that** said pegs and keys are made of hardwood timber, such as beech, birch or oak, and dried to a moisture level between 8 and 10%.

5. The multi-layer wood panel, according to one or more of the preceding claims, **characterized in that** said pegs have axes oriented in several parallel planes, so that the peg axes in one plane are parallel to each other and not parallel to the pegs axes in adjacent parallel planes.

6. The multi-layer wood panel, according to one or more of the preceding claims, **characterized in that** said core member layers and said external finishing layers are made of boards oriented in a cross pattern.

7. The multi-layer wood panel, according to one or more of the preceding claims, **characterized in that** said layers are oriented at an angle between 5° to 85°.
